Europäisches Patentamt

**European Patent Office**

**Office européen des brevets**

(11) Publication number: **0 046 321**
A1

## (12) EUROPEAN PATENT APPLICATION

(21) Application number: **81200898.5**

(22) Date of filing: **11.08.81**

(51) Int. Cl.³: **F 16 C 33/78**

(30) Priority: **19.08.80 NL 8004687**

(43) Date of publication of application: **24.02.82**
**Bulletin 82/8**

(84) Designated Contracting States: **DE FR GB IT NL SE**

(71) Applicant: **SKF Industrial Trading & Development Company B.V., Kelvinbaan 16 P.O. Box 50, NL-3430 AB Nieuwegein (NL)**

(72) Inventor: **Burton, Geoffrey, Meerkoetlaan 23, NL-Bilthoven (NL)**

(74) Representative: **Merkelbach, B., SKF Engineering & Research Centre B.V. Kelvinbaan 16 P.O. Box 50, NL-3430 AB Nieuwegein (NL)**

(54) **Method of arranging a sealing ring in a rolling bearing, and sealing ring to which said method may be applied.**

㊱ Seal retainers normaly have to be mounted with press-fit in bearing rings. This connection requires high tolerances i.e. special machining of the fitting parts. Besides less contact between seal lip and bearing surface can develop after some running periods.

To avoid the above indicated disadvantages it has been found that the improved retainer fulfils two requirements: a) its flange part (3) has to be conical shaped at an angle between 2°-5°. b) the outer diameter on the intersection between line of ring surface (5) and line from touching point (4) at mounting of said flange part (3) has to be at least equal or larger than the inner diameter (Di) of the bearing ring (6).

0046321

Method of arranging a sealing ring in a rolling bearing,
and sealing ring to which said method may be applied

The invention relates to a method of arranging a sealing ring in a rolling bearing, which sealing ring comprises a retaining part of sheet material, consisting of an annular element and a flange extending along the outer periphery of said annular element and projecting generally in axial direction, the sealing ring being forced into the bearing with a press fit between the flange and one of the races of the bearing. Such a method is generally known.

In the known method, the flange of the retaining part of the sealing ring has an outer surface in the form of a circular cylinder of diameter slightly larger than the diameter of the race with which said flange is to make contact in a press fit.

The disadvantage of that method is that before the sealing ring can be forced into the bearing with a press fit, in most cases the cylindrical outer surface of the flange must be ground, because the close tolerances required for a press fit can be maintained only with difficulty, if at all, in the fabrication of the retaining part of the sealing ring, chiefly owing to variations in the thickness of the sheet material, and to wear of the fabricating tools.

The object of the invention is to provide a method of arranging a sealing ring in a rolling bearing that shall be free from this disadvantage.

Said object is accomplished in that, in the method according to the invention, the flange of the retaining part of the sealing ring is shaped so that its outer surface tapers conically towards the annular element, the outside diameter of the flange at the point of intersection with the prolongation of the inner surface of the ring element being at most equal to the diameter of the surface of the race where the flange is to make contact in a press fit, while the diameters of the largest portion of the outer surface of the flange are greater than the said race diameter, the retaining part being pressed into the bearing with the end of smallest diameter foremost.

In this way, it is not necessary to grind the outer surface of the flange before pressing the sealing ring into the bearing.

The invention relates further to a sealing ring for application of the method described above, which sealing ring comprises a retaining member of sheet material consisting of an annular element and a flange extending along the outer periphery of the ring and projecting generally in axial direction, the flange of which sealing ring according to the invention tapers conically towards the annular element, the angle between a generatrix of said outer surface and the horizontal line in axial direction being substantially within the range from $2^{\circ}$ to $5^{\circ}$.

It is noted that U.S.A. Patent 3,715,147 discloses a sealing ring of sheet material for a rolling bearing, provided with a conical flange. After insertion in the bearing, however, this flange is formed in engagement with a conical surface either in the outer race or in the housing of the bearing, where in the former case the flange flares conically towards the annular member.

The invention will be described in more detail with reference to the drawing, in which:

Fig. 1 shows the retaining part of a sealing ring according to the invention, before it is pressed into the outer race of a bearing, in axial section, and

Fig. 2 shows a complete sealing ring according to the invention, after it has been arranged in a ball bearing, in axial section.

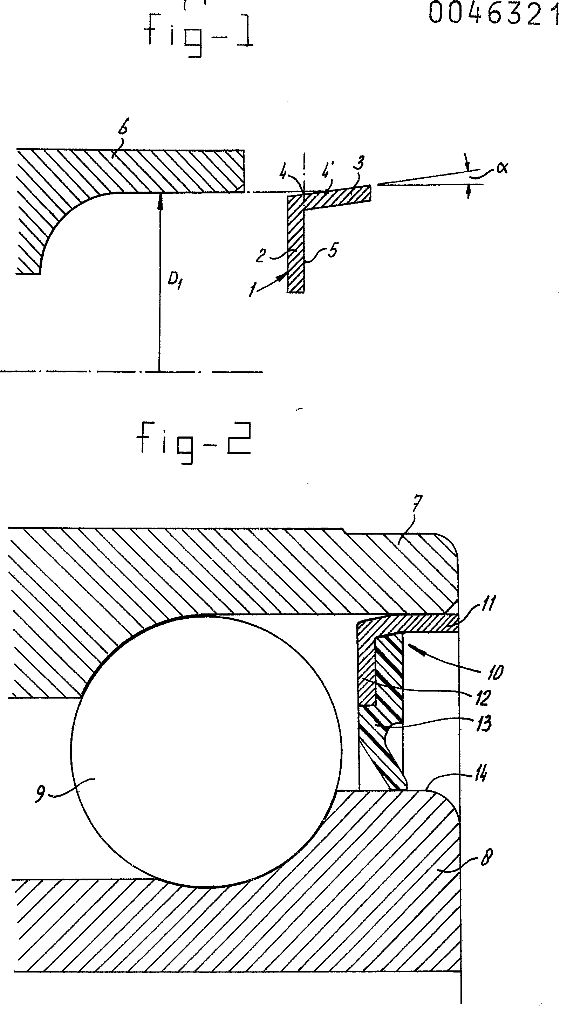

As shown in Fig. 1, the retaining part 1 of a sealing ring according to the invention has an annular element 2 and a flange 3, which retaining part is fabricated for example from a sheet of low-carbon steel 0.5 mm in thickness. The outer surface of the flange 3 tapers conically towards the annular element 2 at an angle $\alpha$ of $2^{\circ}$ more or less. The outside diameter of the flange 3 at the point 4 of intersection with the prolongation of the inner face 5 of the ring 2 is at most equal to the inside diameter $D_1$ of the outer race 6 of the bearing in which the retaining part 1 is to be placed. In Fig. 1, the outside diameter of the flange 3 at the point of intersection 4 is smaller than the inside diameter of the race 6, so that the point on the outer surface of the flange 3 that first comes into contact with the inner edge of the race 6 when the retaining part 1 is inserted in the race 6 is the point 4'.

Fig. 2, in axial section, shows a portion of a ball bearing, consisting of outer race 7, inner race 8, and balls 9 placed between the races. A complete sealing ring 10 according to the invention is arranged with a press fit in the annular space between the races 7 and 8, the flange 11 of the retaining part being in contact with the outer race 7 in a press fit, and the annular element 12 of the retaining part projecting more or less radially inward, while a sealing lip 13 of a flexible material, such as rubber or a synthetic, is arranged around the annular element 12. The free end of the sealing lip 13 is in contact with the inner race 8.

In Figs. 1 and 2, the flange 3 or 11 is forced into the outer race 6 or 7 respectively with a press fit. Alternatively, however, the flange of the retaining member may be forced into the inner race of the bearing with a press fit.

- Claims -

1. Method of arranging a sealing ring in a rolling bearing, which sealing ring comprises a retaining part of sheet material, consisting of an annular element and a flange extending along the outer periphery of said element and projecting generally in axial direction, the sealing ring being forced into the bearing with a press fit between the flange and one of the races of the bearing, characterized in that the flange (3, 11) of the retaining part (2) of the sealing ring (10) is shaped so that the outer surface thereof tapers conically towards the annular element (2), the outside diameter of the flange (3, 11) at the point of intersection (4') with the prolongation of the inner face (5) of the annular element (2) is at most equal to the diameter $(D_1)$ of the surface of the race (6, 7) with which the flange (3, 11) is to make contact in a press fit, while the diameters of the largest portion of the outer surface of the flange (3, 11) are greater than the said diameter $(D_1)$, and the retaining part (2) is pressed into the bearing (7, 8, 0) with the end of smallest diameter foremost.

2. Sealing ring for application of the method according to claim 1, comprising a retaining part of sheet material consisting of an annular element and a flange extending along the outer periphery of the ring and projecting generally in axial direction, characterized in that the outer surface of the flange (3, 11) tapers conically towards the ring, the angle ($\alpha$) between a generatrix of said outer surface and the horizontal line in axial direction being substantially within the range from $2^{\circ}$ to $5^{\circ}$.

fig-1

0046321

fig-2

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | US - A - 3 203 740 (PEICKII)<br>* Column 3, lines 47-48 and lines 56-62; column 4, lines 38-44; figures 2,3 *<br><br>--<br><br>US - A - 2 000 276 (DELAVAL)<br>* Column 2, figures 2,3 *<br><br>--<br><br>DE - B - 1 075 383 (DURKOPP)<br>* Column 3, figures 4,5 *<br><br>---- | 1,2<br><br><br>1 | F 16 C 33/78 |

TECHNICAL FIELDS SEARCHED (Int. Cl.³)

F 16 C
F 16 D

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 18-11-1981 | ORTHLIEB |

EPO Form 1503.1   06.78